# EUROPÄISCHE PATENTANMELDUNG

(11) **EP 1 559 694 A2**
(43) Veröffentlichungstag der Anmeldung: **03.08.2005**
(21) Anmeldenummer: 05001496.8
(22) Anmeldetag: 26.01.2005
(51) Int. Cl.: C04B 22/14

(54) **Pulverförmige Mischung, Verfahren zu ihrer Herstellung und ihre Verwendung zur Chromatreduktion in Zement**

(30) Priorität: 27.01.2004 DE 102004003919; 16.04.2004 DE 102004019191
(71) Anmelder: KRONOS INTERNATIONAL, INC., 51373 Leverkusen (DE)
(72) Erfinder: Kühl, Thomas, Dr., 47441 Moers (DE)

(57) **Zusammenfassung**

Die Erfindung betrifft ein Zusatzmittel zur Chromatreduktion in Zement auf Basis Filtersalz. Filtersalz als Nebenprodukt der Titandioxidherstellung nach dem Sulfatverfahren besteht i.w. aus Fe(II)sulfat-Monohydrat und freier Schwefelsäure (etwa 12 bis 30 Gew.-%). Das Zusatzmittel enthält Filtersalz entweder als wässrige Lösung oder in einer pulverförmigen Mischung mit einem Trägermaterial, z.B. Kalkhydrat, Kalksteinmehl oder gefällter Kieselsäure. Bezogen auf das Filtersalz werden 5 bis 20 Gew.-% Trägermaterial eingesetzt. Darüber hinaus kann die Mischung auch Grünsalz (Fe(II)sulfat-Heptahydrat) enthalten, bevorzugt in einem Verhältnis Filtersalz zu Grünsalz von 2 : 1.

## Beschreibung

Die Erfindung betrifft eine pulverförmige Mischung und eine wässrige Lösung auf Basis Filtersalz, die zur Chromatreduktion in Zement geeignet sind, sowie ein Verfahren zur Herstellung.

Zement enthält aufgrund seiner Rohstoffe und seiner Herstellbedingungen unterschiedliche Mengen an wasserlöslichen sechswertigen Chromverbindungen (Chromat), welche in wässrigen Zementzubereitungen bei Hautkontakt ein allergisches Zementekzem auslösen - die häufigste berufsbedingte Hautkrankheit im Bauwesen. Chromathaltiger Zement enthält bis zu 40 ppm wasserlösliches Cr(VI). Die EU-Richtlinie 2003/53/EG vom 18.06.2003 sieht vor, dass zukünftig nur noch chromatarme Zemente mit einem Gehalt von weniger als 2 ppm wasserlöslichem Cr(VI) eingesetzt werden sollen.

Es gibt verschiedene Möglichkeiten, den Chromatgehalt im Zement zu verringern, u.a. durch die nachträgliche Reduktion des sechswertigen zum dermatologisch unbedenklichen dreiwertigen Chrom. Als vorteilhaft hat sich das Reduktionsmittel Eisen(II)sulfat erwiesen. Daneben werden auch andere Verbindungen wie Zinn- oder Mangansulfat eingesetzt. Eisen(II)sulfat fällt großtechnisch bei der Herstellung von Titandioxid als sogenanntes Grünsalz an, ein Gemisch aus FeSO₄ x 7H₂O (Heptahydrat) und FeSO₄ x 4H₂O (Tetrahydrat)
- im folgenden Heptahydrat genannt. FeSO₄ x 7H₂O entwässert ab 40°C zu FeSO₄ x 4H₂O, welches seinerseits ab 80°C Kristallwasser abspaltet und sich in FeSO₄ x H₂O (Monohydrat) umwandelt.
Das Grünsalz wird entweder als getrocknetes oder als ungetrocknetes Heptahydrat oder nach Entwässerung als Monohydrat eingesetzt. Die Zugabe kann während des Herstellungsprozesses, bei der Entnahme aus dem Silo bzw. bei der Absackung oder beim Anmischen erfolgen. Die Reduktion des Cr(VI) zum Cr(III) erfolgt in der wässrigen Phase beim Anmischen des Mörtels bzw. Betons.

In der EP 0 054 314 B1 wird ein Verfahren beschrieben, bei dem getrocknetes Heptahydrat dem Zementklinker während des Herstellprozesses vor oder nach der Mahlung zugemischt wird. Eisen(II)sulfat kann jedoch durch Oxidation mit Luftsauerstoff leicht an Wirksamkeit als Reduktionsmittel verlieren. Um solche Reaktionen bei der längerfristigen Lagerung im Großsilo zu vermeiden, schlägt die DE 197 44 035 C2 vor, das Eisen(II)sulfat in granulierter Form dem Zement erst bei der Entnahme aus dem Silo vor Absackung oder Silowagentransport zuzugeben.
Die DE 101 57 129 C2 beinhaltet ein Verfahren, bei dem ein Gemisch aus feuchtem Grünsalz (Heptahydrat) und einem inerten Trägermaterial wie Kalksteinmehl als Trocknungsmittel sowie bestimmten Betonzusatzmitteln dem zementären Bindemittel zur Chromatreduzierung zugesetzt wird. Desweiteren wird die Zumischung von feuchtem Grünsalz (Heptahydrat) in Abmischung mit dem inerten Trägermaterial in den Frischmörtel in der DE 100 14 468 C2 beschrieben.
Bei der Lagerung der mit Heptahydrat versetzten Zemente ist neben der schnellen Oxidierbarkeit die mangelnde Temperaturstabilität des Reduktionsmittels zu berücksichtigen. Bei Lagerung über 40°C kann freigesetztes Kristallwasser zu Verklumpungen und unerwünschten Reaktionen führen.

Eisen(II)sulfat ist weiterhin Hauptbestandteil von sogenanntem Filtersalz. Filtersalz wird bei der Aufbereitung bzw. Aufkonzentrierung von Dünnsäure (verdünnte Schwefelsäure) abgetrennt, welche bei der Herstellung von Titandioxid nach dem Sulfatverfahren anfällt. Filtersalz ist ein Metallsulfatgemisch und besteht i.w. aus Fe(II)sulfat-Monohydrat sowie weiteren Metallsulfaten wie z.B. Magnesium- und Titansulfat und erheblichen Mengen an freier Schwefelsäure (etwa 12 bis 30 Gew.-%). Die Feuchte liegt bei etwa 20 bis 40 Gew.-%.

Aufgrund seiner Zusammensetzung, insbesondere des in der Regel hohen Schwefelsäuregehalts wirkt Filtersalz stark korrosiv. Unter den derzeitigen gesetzlichen Bestimmungen in Deutschland ist es als "C Ätzend" zu deklarieren. Die Entsorgung erfolgt überwiegend auf thermischem Weg, indem das Filtersalz extern geröstet, die entstehenden Metalloxide und Schwefeldioxid separiert und der verbliebene unlösliche Abbrand deponiert wird (Ullmann's Encyclopedia of Industrial Chemistry, 6. Auflage 2003, CD-ROM; Abschnitt: Pigments, Inorganic; Kap. 2.1.3.5). Das Verfahren ist energiekostenintensiv und erfordert besondere Materialanforderungen bei Transport und Lagerung des Filtersalzes. Alternativ kann das Filtersalz mit Calciumverbindungen umgesetzt und anschließend deponiert werden.

Aufgrund seines Gehaltes an zweiwertigem Eisen ist Filtersalz zwar grundsätzlich als Reduktionsmittel zur Chromatreduktion in Zement geeignet, allerdings ist es abgesehen von seinem korrosiven Charakter auch wegen seiner inhomogenen, stark klumpenden Konsistenz schlecht direkt verwendbar bzw. dosierbar. Andererseits ist Filtersalz durch den Anteil freier Schwefelsäure auch im unbehandelten Zustand deutlich oxidationsstabiler und damit lagerstabiler als unbehandeltes feuchtes Grünsalz. Zudem ist Filtersalz, da es sich um Monohydrat handelt, wesentlich temperaturstabiler (bis mindestens 100°C) als Grünsalz (Heptahydrat).
In der WO 96/33133 A1 wird ein Verfahren offenbart, in dem Filtersalz mit einem CaOhaltigen Material, insbesondere Zement, behandelt wird, so dass das Produkt sich zur Chromatreduktion in Zement eignet.

Aufgabe der Erfindung ist es, ein neues Reduktionsmittel für Chromat in Zement bereitzustellen, welches die aufgeführten Nachteile der bekannten Produkte vermeidet und darüber hinaus ökonomische und umweltbezogene Vorteile bietet, sowie ein Verfahren zu seiner Herstellung anzugeben.
Die Aufgabe wird gelöst durch eine pulverförmige Mischung, die ein aus der Aufkonzentrierung von verdünnter Schwefelsäure, welche bei der Herstellung von Titandioxid nach dem Sulfatverfahren anfällt, stammendes Filtersalz und ein Trägermaterial enthält und die einen Medianwert der volumenbasierten Partikelgrößenverteilung von 10 bis 30 µm, insbesondere 15 bis 25 µm aufweist. Die Aufgabe wird weiterhin durch die Verwendung von Filtersalz zur Chromatreduktion gelöst, indem das Filtersalz in wässriger Lösung eingesetzt wird.
Weitere vorteilhafte Ausgestaltungen der Erfindung sind in den Unteransprüchen beschrieben.

In einer ersten Ausführungsform der Erfindung wird das Filtersalz durch Mischung mit einem Trägermaterial in ein homogenes trockenes Pulver überführt, das dem trockenen Zement oder dem Trockenmörtel zugegeben werden kann. Auch nach einmonatiger Lagerung bei Temperaturen von 50 °C zeigen Filtersalz-Zementmischungen keine Konsistenzänderung wie z.B. Verklumpung.
Als Trägermaterial kommen anorganische pulverförmige Materialien und Gesteinsmehle in Frage, beispielsweise gefällte Kieselsäure oder Kalksteinmehl oder Kalkhydrat. Das Trägermaterial adsorbiert die freie Schwefelsäure, bewirkt somit eine effektive Trocknung und vermindert die Korrosivität der Mischung. Alkalisch reagierende Trägermaterialien wie Kalksteinmehl und insbesondere Kalkhydrat führen darüber hinaus zu einer Neutralisation der freien Schwefelsäure und damit zu einer weiteren erheblichen Verminderung der Korrosivität der Mischung. Außerdem ist der Einsatz von Kalkhydrat gegenüber gefällter Kieselsäure wirtschaftlicher. Das Trägermaterial wird in einer Menge von 5 bis 20 Gew.-% bevorzugt von 10 bis 17 Gew.-% untergemischt.
Die volumenbasierte Partikelgrößenverteilung der erfindungsgemäßen pulverförmigen Mischung weist einen Medianwert von 10 bis 30 µm bevorzugt 15 bis 25 µm auf. Die Partikelgrößenverteilung wurde mittels Laserbeugung in einem Mastersizer 2000 von Malvern Instruments unter Verwendung der Trockendispergiereinheit Scirocco 2000A gemessen. Dabei wurden folgende Messbedingungen eingehalten: Dispergierung in Stickstoff bei 3 bar Dispergierdruck, Aufgabe in Schüttelrinne für < 200 g Probenmaterial mit 50% Vibration Feed Rate, Messzeit 10 Sekunden mit 10000 Schüssen (snaps), Untergrundmessung 10 Sekunden mit 10000 Schüssen (snaps).

Bekanntermaßen ist die Löslichkeit von FeSO₄-Monohydrat geringer als die von FeSO₄-Heptahydrat. Um bei der Chromatreduktion in Zement vergleichbare Restchromatgehalte zu erhalten, ist deswegen bei der Trockenzugabe eine höhere Dosierung des Monohydrats gegenüber dem Heptahydrat (bezogen auf die Wirksubstanz) erforderlich. Da das Eisensulfat im Filtersalz ausschließlich als Monohydrat vorliegt, kann es vorteilhaft sein, dem Filtersalz Grünsalz in Form von Heptahydrat zur Erhöhung des Wirksubstanzgehalts zuzusetzen.

Die direkte Mischung von Filtersalz und Grünsalz führt zu einem feuchten, stark klumpenden Produkt, dessen Konsistenz auch durch den nachfolgenden Zusatz von Trägermaterial als Trockenmittel nicht verbessert wird. Überraschenderweise ist es jedoch möglich, ein rieselfähiges dosierbares Produkt zu erhalten, wenn das Filtersalz zuerst mit dem Trägermaterial vermischt und anschließend das feuchte Grünsalz hinzugegeben wird.

In einer zweiten Ausführungsform der Erfindung wird das Filtersalz als wässrige Lösung, beispielsweise in einer Konzentration von 30%, verwendet. Sie wird als flüssiges Zusatzmittel direkt dem Anmachwasser der Mörtel- oder Betonmischung zugesetzt. Die chromatreduzierende Wirkung der Filtersalzlösung ist gleichwertig mit der einer Dosierung von getrocknetem (granuliertem) Heptahydrat entsprechender Fe(II)-Konzentration.

Die Erfindung wird im folgenden an Hand von zwei Ausführungsbeispielen erläutert, ohne dass damit eine Einschränkung der Erfindung verbunden ist.

### Beispiel 1

Chromathaltiger Portlandzement CEM I 32,5 mit einer Konzentration von 6,7 ppm Cr(VI) wurde zum einen mit einer 30 %igen Filtersalz-Lösung und parallel mit granuliertem Grünsalz jeweils in unterschiedlichen Dosierungen gemischt und der wasserlösliche Chromatgehalt angelehnt an die Vorschrift der TRGS 613 (Technische Regeln für Gefahrstoffe), Ausgabe Oktober 2002 bestimmt. Die Messung der Cr(VI)-Konzentration erfolgte mit dem Dr. Lange Schnelltest LCK 313.
Die Bestimmung des Gehalts an freier Schwefelsäure in dem Filtersalz bzw. in den Filtersalzmischungen erfolgt so, dass die Schwefelsäure zunächst in Aceton gelöst und anschließend alkalimetrisch gegen Natronlauge-Maßlösung gemessen wird.

Filtersalz und Grünsalz hatten folgende Zusammensetzung:

| | **Filtersalz** | **Grünsalz** **granuliert / feucht** |
|---|---|---|
| **freie Schwefelsäure** | 16,6 Gew.-% | < 0,1 Gew.-% / 0,4 Gew.-% |
| **Feststoffgehalt** | 75,0 Gew.-% | 99 Gew.-% / > 95 Gew.-% |
| **Fe(II)** | 15,3 Gew.-% (Monohydrat) | 19,6 Gew.-% / 17,6 Gew.-% (Heptahydrat) |

In den mit der Filtersalzlösung versetzten Zementen wird im Vergleich zu den mit Grünsalz versetzten Zementen bei gleicher Fe(II)-Konzentration eine gleichwertige Chromat-Reduktion erreicht:

| **Filtersalz** | | **getrocknetes** **Fe(II)** | **Heptahydrat** **Cr(VI)** |
|---|---|---|---|
| **Fe(II)** **g/kg Zement** | **Cr(VI)** **ppm** | g/kg Zement | ppm |
| 0,08 | 2,0 | 0,10 | 5,8 |
| 0,17 | < 0,6 | 0,20 | 0,8 |
| 0,32 | < 0,6 | 0,39 | < 0,6 |

### Beispiel 2

Es wurden vier verschiedene Filtersalzmischungen (A, B, C, D) mit Kalkhydrat (KH) bzw. gefällter Kieselsäure (KS) und teilweise Grünsalz hergestellt, wobei zunächst das Filtersalz mit dem Trägermaterial Kalkhydrat bzw. Kieselsäure homogenisiert und bei den Mischungen C und D in einem zweiten Schritt das feuchte Grünsalz dazugegeben wurde.
In der Mischung A wurde ein Filtersalz mit einem Gehalt an freier Schwefelsäure von 19,3 Gew.-% verwendet und stöchiometrisch mit Kalkhydrat technischer Qualität (95,5 Gew.-% Ca(OH)₂) gemischt. In den Mischungen B, C und D wurde als Trägermaterial gefällte Kieselsäure (> 95 Gew.-% SiO₂) eingesetzt. Die Zusammensetzungen von Filtersalz und Grünsalz in diesen Mischungen entsprechen der in Beispiel 1 angegebenen.

| | **Filtersalz** | **Trägermaterial** **(KH, KS)** | **Grünsalz** | **Fe(II)** **in Mischung** | **freie Schwefelsäure in Mischung** |
|---|---|---|---|---|---|
| | Gew.-% | Gew.-% | Gew.-% | Gew.-% | Gew.-% |
| **A** | 86,8 | KH: 13,2 | 0 | 13,9 | 0,6 |
| **B** | 90,0 | KS: 10,0 | 0 | 13,8 | 14,9 |
| **C** | 59,5 | KS: 10,5 (15)* | 30,0 | 14,4 | 9,8 |
| **D** | 42,5 | KS: 7,5 (15)* | 50,0 | 15,3 | 7,0 |

| | | | | | |
|---|---|---|---|---|---|
| * Gew.-% bezogen auf Filtersalzmenge | | | | | |

Die trockenen, rieselfähigen Filtersalzmischungen A, B, C und D wurden zunächst durch 48stündige Lagerung bei 50°C auf Wärmestabilität überprüft. Die Mischungen A, B und C zeigten keine Konsistenzänderungen, während bei Mischung D nach 1 Tag Verklumpungen zu beobachten waren.
Die Tabelle zeigt die deutliche Verringerung des Gehalts an freier Schwefelsäure in den Mischungen. Die Mischungen B, C und D (mit Kieselsäure) sind nach den derzeitigen gesetzlichen Bestimmungen in Deutschland nur noch als "Xi Reizend" zu deklarieren. Die Filtersalzmischung A (mit Kalkhydrat) ist sogar als lediglich "Xn Gesundheitsschädlich" einzustufen.
Die Mischungen A, B, C und D wurden in unterschiedlicher Dosierung mit Portlandzement CEM I 32,5 wie in Beispiel 1 nach TRGS 613 angemischt und der Cr(VI)-Gehalt entsprechend gemessen. Parallel wurden eine Zementprobe ohne Reduktionsmittel sowie eine Zementmischung mit 0,2 Gew.-% granuliertem Grünsalz anstelle der Filtersalzmischung geprüft.

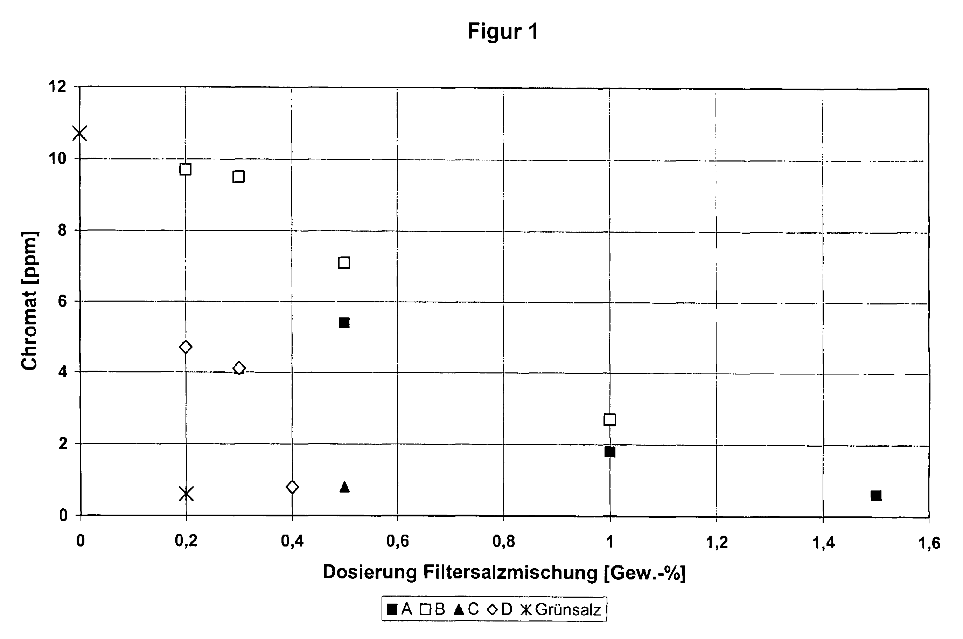

Figur 1 zeigt die gemessene Chromatkonzentration im Anmachwasser der Zementmischungen in Abhängigkeit von der Art der zugegebenen Filtersalzmischung (A, B, C, D) und der Dosierungsmenge. Bei Einsatz der reinen Filtersalzmischungen mit Kalkhydrat bzw. Kieselsäure (Mischungen A und B) ist eine Dosierung von etwa 1 bis 1,2 Gew.-% erforderlich, um den erforderlichen Restchromatgehalt von kleiner 2 ppm zu erreichen. Bereits bei einem Mischungsverhältnis Filtersalz zu Grünsalz von 2 : 1 (Mischung C) kann die Dosierungsmenge halbiert werden; es wird ein optimiertes Ergebnis hinsichtlich Chromatreduktion und Dosierung erreicht.

## Patentansprüche

1. Pulverförmige Mischung,
die ein aus der Aufkonzentrierung von verdünnter Schwefelsäure, welche bei der Herstellung von Titandioxid nach dem Sulfatverfahren anfällt, stammendes Filtersalz und ein Trägermaterial enthält und die einen Medianwert der volumenbasierten Partikelgrößenverteilung von 10 bis 30 µm insbesondere 15 bis 25 µm aufweist.

2. Pulverförmige Mischung nach Anspruch 1 **dadurch gekennzeichnet,**
**dass** das Trägermaterial ausgewählt ist aus der Gruppe Kalkhydrat, Kalksteinmehl und gefällte Kieselsäure.

3. Pulverförmige Mischung nach Anspruch 1 oder 2 **dadurch gekennzeichnet,**
**dass** das Trägermaterial in einer Menge von 5 bis 20 Gew.-% bevorzugt 10 bis 17 Gew.-% bezogen auf das Filtersalz vorliegt.

4. Pulverförmige Mischung nach einem oder mehreren der Ansprüche 1 bis 3 **dadurch gekennzeichnet,**
**dass** das Filtersalz in einer Menge von bis zu 60 Gew.-%, bevorzugt in einer Menge von 33 Gew.-% durch Grünsalz ersetzt ist.

5. Verfahren zur Herstellung der pulverförmigen Mischung nach Anspruch 4 **dadurch gekennzeichnet,**
**dass** zuerst das Filtersalz mit dem Trägermaterial gemischt und anschließend das Grünsalz zugefügt wird.

6. Verwendung der pulverförmigen Mischung nach einem oder mehreren der Ansprüche 1 bis 4 zur Chromatreduktion in Zement.

7. Verwendung von aus der Aufkonzentrierung von verdünnter Schwefelsäure, welche bei der Herstellung von Titandioxid nach dem Sulfatverfahren anfällt, stammendem Filtersalz zur Chromatreduktion, **dadurch gekennzeichnet,**
**dass** das Filtersalz in wässriger Lösung eingesetzt wird.
